# EUROPEAN PATENT SPECIFICATION

(11) **EP 1 710 970 B1**
(45) Date of publication and mention of the grant of the patent: **08.10.2008**
(21) Application number: 05102622.7
(22) Date of filing: 04.04.2005
(51) Int. Cl.: H04L 29/06, G07C 9/00

(54) **System and Method for Deleting Confidential Information**
Vorrichtung und Verfahren zum Löschen von vertraulichen Daten
Système et procédé d'effacement d'informations confidentielles

(43) Date of publication of application: 11.10.2006
(73) Proprietor: Research In Motion Limited, Waterloo, Ontario N2L 3W8 (CA)
(72) Inventor: Adams, Neil, N2K 4E4, Waterloo (CA); Brown, Michael S, N2K 4B1, Waterloo (CA); Brown, Michael K, N2M 2Z2, Kitchener (CA); Little, Herb, N2T 2V8, Waterloo (CA); Totzke, Scott, N2K 3Y5, Waterloo (CA)
(74) Representative: Rickard, David John

(56) References cited:
- EP-A- 0 885 417
- EP-A- 1 398 934
- DE-A1- 19 947 574
- US-A1- 2003 174 839
- US-B1- 6 594 759

## Description

In some devices, confidential information is stored using content protection, for example, encrypted with a password which the user of the device enters via a user input interface. However, in other devices, for example those without a suitable user input interface, confidential information may be stored without any protection, that is, transparently, or "in the clear". If this device is stolen, the confidential information may be revealed by probing the memory in which the confidential information is stored.

In general, wireless communication is insecure and susceptible to attacks. Cryptographic techniques may be employed to secure a wireless communication link. In symmetric-key systems (also known as "secret-key systems"), a single, common cryptographic key is stored by two communication devices. In public-key systems (also known as "public-private pair systems"), each communication device stores its own private key and freely distributes its own public key. If the symmetric key or either or both of the private keys is not kept secret, the security of the communication between the two devices is compromised. A hostile third party with knowledge of the secret may impersonate one or both of the devices.

[0002a] EP1398934 discloses a system in which an access control list is stored in a server communications device and a mechanism is provided for storing individual access control lists in a safe manner. A protected database may, for example, be implemented by storing the data on a special circuit, by providing software-based protection, such as encryption, authentication, etc., or a combination thereof. Therefore the server communications device is able to implement content protection.

[0002b] US2003/0174839 discloses a system in which each application allocated on a memory region of an integrated circuit (IC) card is registered in a directory, and the memory region is managed in directory units. A personal identification code is set for each application and directory, and the access right is controlled in application units or directory units. If a mobile terminal is lost, the right to access each application in the IC card automatically disappears. Therefore, the right to access each application allocated to the memory region on the IC card is efficiently controlled.

[0002c] US6594759 discloses a computer configured to authenticate a user to an electronic transaction system. The computer includes a central processing unit and electronic authorization firmware disposed within the computer and in electronic communication with the central processing unit. The electronic authorization firmware includes a non-volatile memory circuit configured to store at least one of a user private key and user identification data and a firmware identification data. The electronic authorization firmware further includes decryption logic circuitry disposed between the non-volatile memory circuit and the electronic transaction system. The decryption logic circuitry is configured to prevent unauthorized access to at least one of the user private key and the user identification data in the non-volatile memory circuit.

[0002d] In a main aspect, the present invention provides a system comprising: a first wireless-enabled device arranged to store confidential information in the clear, where said first device is able to access sensitive information stored in a security device; and a second wireless-enabled device arranged to store said confidential information with content protection, wherein said system is arranged to use said confidential information to secure a wireless communication link between said first device and said second device said link provides said second device with access to said sensitive information, and wherein one or both of said first device and said second device is arranged to delete said confidential information upon fulfilment of one or more conditions related to said communication link, and wherein said one or more conditions comprise having the strength of a wireless signal received by said first device or said second device below a predetermined level or below said predetermined level for at least a predefined period of time, said signal having originated at the other of said first device or said second device. In other aspects, the present invention provides a method to be implemented by the system of the invention, a device comprising a part of the system and a machine readable medium comprising code means for causing said device to implement the method of the invention.

### BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

Figure 1 is a schematic diagram of an exemplary system, according to some embodiments of the invention; and

Figure 2 is a block diagram of an exemplary device in the system of figure 1, according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

### Description of Preferred Embodiments

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

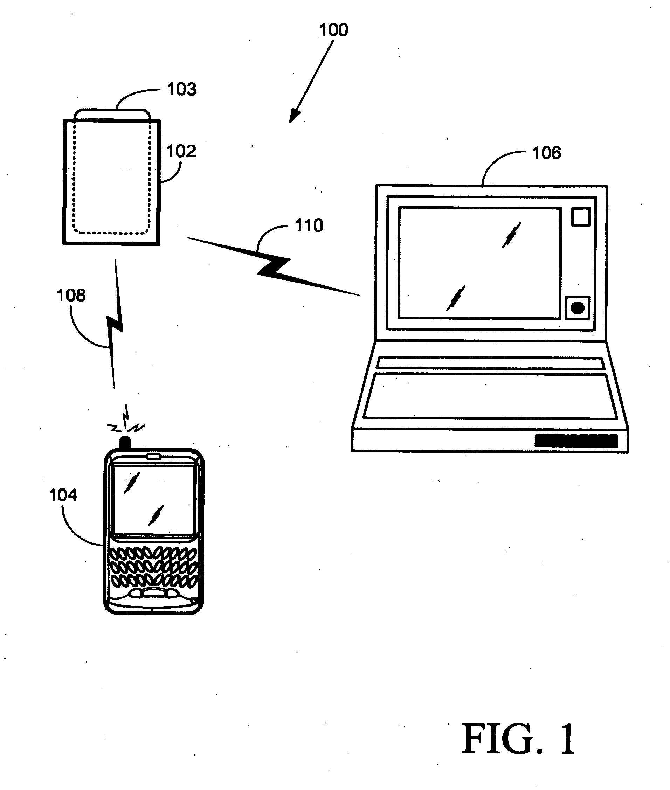

Figure 1 is a schematic diagram of an exemplary system, according to some embodiments of the invention. A system 100 includes a wireless-enabled smart card reader 102, a wireless-enabled mobile device 104, and a wireless-enabled personal computer 106. A smart card 103 is shown inserted into smart card reader 102.

Smart card reader 102 and mobile device 104 may communicate via a wireless communication link 108, and smart card reader 102 and personal computer 106 may communicate via a wireless communication link 110. In this description and the claims, a wireless communication link may include one or more wired portions and/or one or more optical portions. As shown in Figure 1, communication links 108 and 110 are wireless communication links, for example Bluetooth^{®} communication links.

In addition, communication link 108 may be a direct communication link between smart card reader 102 and mobile device 104, or may include any combination of additional communication devices (not shown) such as gateways, routers, switches and the like. Similarly, communication link 110 may be a direct communication link between smart card reader 102 and personal computer 106, or may include any combination of additional communication devices (not shown) such as gateways, routers, switches and the like. Communication links 108 and 110 may be accessible to other devices and may be susceptible to intrusions and unwanted attacks.

Smart cards are personalized security devices, defined by the IS07816 standard and its derivatives, as published by the International Organization for Standardization. A smart card may have a form factor of a credit card and may include a semiconductor device. The semiconductor device may include a memory that can be programmed with a secret key and with an authentication certificate, and may include a decryption engine, e.g., a processor and/or dedicated decryption logic. A smart card may include a connector for powering the semiconductor device and performing serial communication with an external device. Alternatively, smart card functionality may be embedded in a device having a different form factor and different communication protocol, for example a Universal Serial Bus (USB) device.

The person whose security information is stored on smart card 103 may use smart card reader 102 for identification and to digitally sign and/or decrypt messages sent by mobile device 104.

For example, mobile device 104 may be able to send and receive e-mail messages via an e-mail server (not shown). If, for example, the Secure Multipurpose Internet Mail Extensions (S/MIME) protocol is used, e-mail messages received at mobile device 104 are encrypted using a symmetric algorithm with a random session key generated by the sender of the e-mail message. The e-mail message also includes the session key, encrypted using the public key of the recipient. Upon receipt of an encrypted e-mail message, mobile device 104 may extract the encrypted session key and send it to smart card reader 102 via communication link 108. Smart card reader 102 may send the encrypted session key to smart card 103, and the decryption engine of smart card 103 may decrypt the encrypted session key using the recipient's private decryption key, which is stored in smart card 103. Smart card reader 102 may retrieve the decrypted session key from smart card 103 and forward it to mobile device 104 via communication link 108 so that mobile device 104 can decrypt the received e-mail message. The smart card 103 may prevent unauthorized use of the recipient's private decryption key by requiring that a password or personal identification number (PIN) be supplied before allowing the decryption operation to proceed.

Similarly, to add a digital signature to an e-mail message being sent by mobile device 104, mobile device 104 may send a hash of the contents of the e-mail message to smart card reader 102 over communication link 108. Smart card reader 102 may pass the hash to smart card 103, which may produce a digital signature from the hash and the sender's private signing key, which is stored in smart card 103, Smart card 103 may then pass the digital signature to smart card reader 102, which may forward it to mobile device 104 via communication link 108 so that mobile device 104 can transmit it along with the e-mail message to the e-mail server. Again, smart card 103 may prevent unauthorized use of the recipient's private signing key by requiring that a password or PIN be supplied before allowing the signing operation to proceed.

The unencrypted session key should be sent securely over communication link 108 from smart card reader 102 to mobile device 104 to prevent a third party from retrieving the session key from communication link 108. Similarly, the hash to be signed should be sent authentically over communication link 108 from smart card reader 102 to mobile device 104 to prevent a third party from modifying the hash and thereby causing smart card 203 to produce a signature using a hash different from the hash of the intended message.

Smart card reader 102 and mobile device 104 may each store a common, symmetric key and use a symmetric algorithm to secure communications over communication link 108. Alternatively, smart card reader 102 and mobile device 104 may store their own private keys and each other's public keys, and use an asymmetric algorithm to secure communications over communication link 108. If smart card reader 102 lacks the means to implement content protection, then a secret (the symmetric key shared by mobile device 104 and smart card reader 102, or the private key of smart card reader 102) may be stored in smart card reader 102 in the clear.

The person whose security information is stored on smart card 103 may wish to digitally sign outgoing e-mail sent from personal computer 106 or to decrypt incoming encrypted e-mail received at personal computer 106. This will require personal computer 106 to communicate with smart card reader 102 in much the same way as mobile device 104 communicates with smart-card reader 102 as described above. For this purpose, or for other security-related measures (e.g., to permit the person to use personal computer 106), communication link 110 between personal computer 106 and smart card reader 102 will need to be secured.

Smart card reader 102 and personal computer 106 may each store a common, symmetric key and use a symmetric algorithm to secure communications over communication link 110. Alternatively, smart card reader 102 and personal computer 106 may store their own private keys and each other's public keys, and use an asymmetric algorithm to secure communications over communication link 110. If smart card reader 102 lacks the means to implement content protection, then a secret (the symmetric key shared by personal computer 106 and smart card reader 102, or the private key of smart card reader 102) may be stored in smart card reader 102 in the clear.

Any secret stored in smart card reader 102 in the clear is vulnerable to discovery if smart card reader 102 is stolen and its memory is probed. According to some embodiments of the invention, a secret used to secure wireless communications between two devices, at least one of which stores the secret in the clear (e.g., smart card reader 102) is deleted from time to time. It is sufficient to delete the secret from one of the two devices to disable secure communications between the two devices. In order to resume secure communications, a new secret will need to be established and, in the case of a symmetric key, shared securely between the two devices.

If the secret is deleted too frequently, this creates a burden on the rightful user of the two devices to establish and share a new secret. Yet, if the secret is deleted too infrequently, security may be significantly compromised if the device storing the secret in the clear is stolen, the secret is exposed and traffic over the communication link is intercepted or falsified.

The following is a non-exhaustive list of examples of rules that affect when the secret is deleted. In order for the secret to be deleted, the condition embodied in the rule should be fulfilled. If a combination of two or more rules is in effect, then it is generally sufficient that one of the conditions be fulfilled for the secret to be deleted.

(1) General Timeout. The secret may be deleted once a predefined period of time, for example, 24 hours, has elapsed since the secret was generated.

(2) Device Inactivity. The secret may be deleted once a predefined period of time has elapsed since the last communication between the mobile device and the device which stores the secret in the clear (e.g., smart card reader 102) and the other device (e.g., mobile device 104 or personal computer 106), even though the communication link (e.g., communication link 108 or 110) between the device which stores the secret in the clear and the other device remains enabled. Exemplary values for this predefined period of time are 8 hours for mobile device 104 and 24 hours for personal computer 106.

In these two cases above, if the device which stores the secret in the clear is stolen, the thief has less than the predefined period of time to carry out an attack before the secret is deleted.

(3) Loss of Connection over Communication Link. The secret may be deleted once a predefined period of time has elapsed since the loss of connectivity over the communication link (e.g., communication link 108 or 110) between the device which stores the secret in the clear (e.g., smart card reader 102) and the other device (e.g., mobile device 104 or personal computer 106). Exemplary values for this predefined period of time are 5 minutes for mobile device 104 and 24 hours for personal computer 106.

In this case above, if the device which stores the secret in the clear is stolen, the thief has less than the predefined period of time to carry out an attack before the secret is deleted, and the attack must take place with the device which stores the secret in the clear within range of the other device.

Alternatively, the secret may be deleted once there is a loss of connectivity over the communication link between the device which stores the secret in the clear and the other device.

(4) Decline in Signal Strength. The secret may be deleted once the strength of a wireless signal received by the device which stores the secret in the clear (e.g., smart card reader 102) falls below a predetermined level, where the signal originates at the other device (e.g., mobile device 104 or personal computer 106). Alternatively, the secret may be deleted once the received strength of a wireless signal originating at the device which stores the secret in the clear (e.g., smart card reader 102) and received at the other device (e.g., mobile device 104 or personal computer 106) falls below a predetermined level. Alternatively, the secret may be deleted once the strength of the received wireless signal remains below the predetermined level for a predefined period of time.

(5) Number of transactions. The secret may be deleted once a predefined number of transactions, for example, 100, have occurred between the device which stores the secret in the clear (e.g. smart card reader 102) and the other device. A non-exhaustive list of examples for transactions includes decrypting an e-mail, signing a message, and unlocking the other device. For example, a value of 0 would imply no limit. In this case, if the device which stores the secret in the clear is stolen, the thief has access to only a limited amount of data encrypted with the secret.

In each of these rules above, the secret may be deleted at either or both of the devices. Moreover, rules with different restrictiveness in the conditions could be applied separately to two or more secrets of different confidentiality that are stored in the devices. For example, the predefined period of time could be shorter for a key of more confidentiality than for a key with less confidentiality. In another example, the predefined level for signal strength could be higher for a key of more confidentiality than for a key of less confidentiality. In a further example, the number of transactions could be lower for an encryption key than for owner information.

(6) Smart card removal timeout. The secret may be deleted once a predefined period of time, for example, 5 minutes, has elapsed since the removal of smart card 103 from smart card reader 102. In this case, if the rightful user removes smart card 103 from smart card reader 102 to use smart card 103 elsewhere, a thief who steals the "empty" smart card reader 102 has less than the predefined period of time to carry out an attack before the secret is deleted. The predefined period of time may be zero time. The secret may be deleted at smart card reader 102, and also at the other device once smart card reader 102 informs the other device of the removal of smart card 103, if desired.

In each of the rules above having a predefined period of time, the predefined period of time may be configured by the user on the mobile device or the stationary device and transferred to the device which stores the secret in the clear, or the predefined period of time may be set as an Information Technology (IT) policy in an organization. Similarly, the predefined number of transactions may be configured by the user on the mobile device or the stationary device and transferred to the device which stores the secret in the clear, or the predefined number of transactions may be set as an IT policy in an organization.

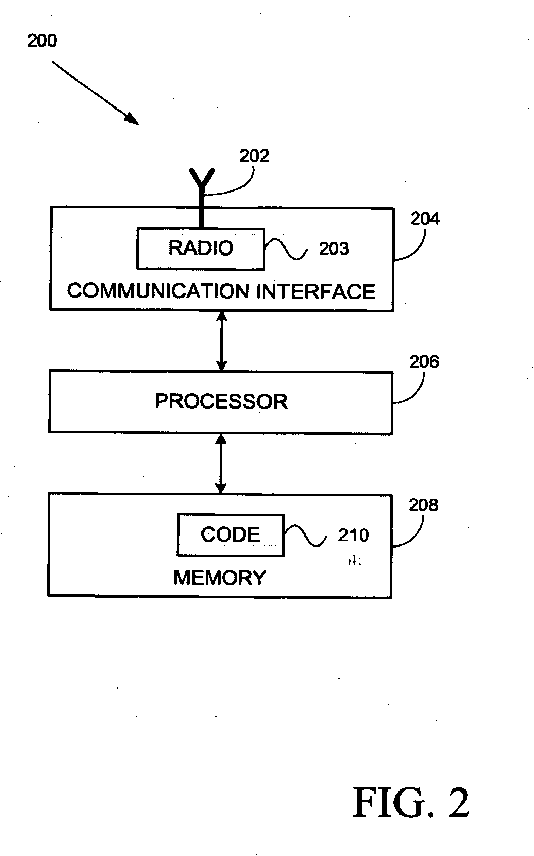

Figure 2 is a block diagram of an exemplary device 200; according to some embodiments of the invention. A non-exhaustive list of examples for device 200 includes a cellular phone, a personal digital assistant (PDA), an electronic mail (Email) client, a gaming device, a laptop computer, a notebook computer, a desktop computer, a server computer, and any other suitable apparatus. Device 200 may be a mobile device such as mobile device 104, or a personal computer such as personal computer 106, or may include smart card reader functionality, such as that of smart card reader 102.

Device 200 includes an antenna 202. A non-exhaustive list of examples for antenna 202 includes a dipole antenna, a monopole antenna, a multilayer ceramic antenna, a planar inverted-F antenna, a loop antenna, a shot antenna, a dual antenna, an omnidirectional antenna and any other suitable antenna.

Device 200 includes a communication interface 204 including a radio 203 coupled to antenna 202. A non-exhaustive list of examples of wireless communication standards with which communication interface 204 is compatible includes the Institute of Electrical and Electronic Engineers (IEEE) for Wireless LAN MAC and Physical layer (PHY) 802.11 a, b, g and n specifications or future related standards, the Bluetooth^{®} standard, the Zigbee^{™} standard and the like.

Device 200 also includes a processor 206 coupled to communication interface 204. Device 200 also includes a memory 208, which may be fixed in or removable from device 200. Memory 208 may be coupled to processor 206 or partly embedded in processor 206. Communication interface 204 and processor 206 may be part of the same integrated circuit or in separate integrated circuits. Similarly, processor 206 and memory 208 may be part of the same integrated circuit or in separate integrated circuits.

A non-exhaustive list of examples for processor 206 includes a central processing unit (CPU), a digital signal processor (DSP), a reduced instruction set computer (RISC), a complex instruction set computer (CISC) and the like. Furthermore, processor 206 may be part of an application specific integrated circuit (ASIC) or may be a part of an application specific standard product (ASSP).

A non-exhaustive list of examples for memory 208 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

Memory 208 may store confidential information which is used to secure a communication link through communication interface 204 to another device that also stores the confidential information. At least one of device 200 and the other device stores the confidential information in the clear.

Memory 208 may store executable code 210 which, when executed by processor 206, determines the confidential information from device 200 upon fulfillment of one or more conditions related to the communication link that the confidential information is to be used to secure. A non-exhaustive list of examples of rules that affect when the confidential information is deleted is given above.

## Claims

1. A system (100) comprising:
a first wireless-enabled device (102) arranged to store confidential information in the clear, wherein said first device (102) is able to access sensitive information stored in a security device (103); and
a second wireless-enabled device (104, 106) arranged to store said confidential information with content protection,
wherein said system (100) is arranged to use said confidential information to secure a wireless communication link (108, 110) between said first device (102) and said second device (104, 106), said link provides said second device (104, 106) with access to said sensitive information, and
wherein one or both of said first device (102) and said second device (104, 106) is arranged to delete said confidential information upon fulfillment of one or more conditions related to said communication link (108, 110), and
wherein said one or more conditions comprise having the strength of a wireless signal received by said first device (102) or said second device (104, 106) below a predetermined level or below said predetermined level for at least a first predefined period of time, said signal having originated at the other of said first device (102) or said second device (104, 106).

2. The system (100) of claim 1, wherein said one or more conditions comprise:
a lack of communication between said first device (102) and said second device (104) over said communication link (108, 110) for at least a second predefined period of time,
and/or
a loss of connectivity over said communication link (108, 110),
and/or
a loss of connectivity over said communication link (108, 110) for at least a third predefined period of time,
and/or
that a number of transactions over said communication link (108, 110) has exceeded a predefined number.

3. The system (100) of claim 1 or claim 2, wherein said security device (103) is a smart card (103) and said first device (102) comprises smart card reader functionality.

4. The system (100) of claim 3, wherein said one or more conditions comprise
removal of said smart card (103) from said first device (102),
or
removal of said smart card (103) from said first device (102) for at least a fourth predefined period of time.

5. The system (100) of any one of claims 1 to 4, wherein said communication link (108, 110) is a Bluetooth® link.

6. A first device (200) able to access sensitive information stored in a security device (103), the first device (200) comprising:
a communication interface (204) compatible with a wireless communication standard;
a processor (206); and
a memory (208) able to store confidential information that is to be used to secure a wireless communication link from said first device (200) to a second device that stores said confidential information, wherein said link is used by said second device to gain access to said sensitive information via said first device,
wherein said memory (208) is arranged to store said confidential information in the clear,
wherein said memory (208) is arranged to store executable code means (210) which, when executed by said processor (206), deletes said confidential information from said first device (200) upon fulfillment of one or more conditions related to said communication link, and
wherein said one or more conditions comprise having the strength of a wireless signal received by said first device (102) or said second device (104, 106) below a predetermined level or below said predetermined level for at least a first predefined period of time, said signal having originated at the other of said first device (102) or said second device (104, 106).

7. The first device (200) of claim 6, wherein said one or more conditions comprise:
a lack of communication between said first device (200) and said second device over said communication link for at least a second predefined period of time,
and/or
a loss of connectivity over said communication link,
and/or
a loss of connectivity over said communication link for at least a third predefined period of time,
and/or
that a number of transactions over said communication link has exceeded a predefined number.

8. The first device (200) of claim 6 or claim 7, wherein said first device (200) comprises smart card reader functionality.

9. The first device (200) of any one of claims 6 to 8, wherein said one or more conditions comprise
decoupling of said security device (103) from said first device (200),
or
decoupling of said security device (103) from said first device (200) for at least a fourth predefined period of time.

10. The first device (200) of any one of claims 6 to 9, wherein said communication standard is the Bluetooth® standard.

11. A method comprising:
deleting confidential information from one or both of a first wireless-enabled device (102) and a second wireless-enabled device (104, 106) upon fulfillment of one or more conditions related to a wireless communication link (108, 110) between said first device (102) and said second device (104, 106) that said confidential information is used to secure,
wherein said one or more conditions comprise having the strength of a wireless signal received by said first device (102) or said second device (104, 106) below a predetermined level or below said predetermined level for at least a first predefined period of time, said signal having originated at the other of said first device (102) or said second device (104, 106).
wherein said first device (102) stores said confidential information in the clear, and said first device (102) is able to access sensitive information stored in a security device (103), and
wherein said second device (104, 106) uses said link (108, 110) when secured by said confidential information to access said sensitive information.

12. The method of claim 11, wherein said one or more conditions comprise
a lack of communication between said first device (102) and said second device (104) over said communication link (108, 110) for at least a second predefined period of time,
and/or
a loss of connectivity over said communication link (108, 110),
and/or
a loss of connectivity over said communication link (108, 110) for at least a third predefined period of time,
and/or
that a number of transactions over said communication link (108, 110) has exceeded a predefined number.

13. The method of claim 11 or claim 12, wherein said first device (102) comprises smart card reader functionality and said security device (103) is a smart card (103), and said one or more conditions comprise
removal of said smart card (103) from said first device (102),
or
removal of said smart card (103) from said first device (102) for at least a fourth predefined period of time.

14. A machine readable medium (208) comprising executable code means (210) which when executed by a processor (206) of the device (200) of any one of claims 6 to 10 causes said device (200) to implement the method of any one of claims 11 to 13.

## Patentansprüche

1. Vorrichtung (100), umfassend:
ein erstes drahtlosfähiges Gerät (102), das zum Speichern vertraulicher Daten in Klartext eingerichtet ist, wobei dieses erste Gerät (102) in der Lage ist, auf sensitive Daten zuzugreifen, die in einem Sicherheitsgerät (103) gespeichert sind; und
ein zweites drahtlosfähiges Gerät (104, 106), das zum Speichern der vertraulichen Daten mit Inhaltsschutz eingerichtet ist,
wobei die Vorrichtung (100) dazu eingerichtet ist, die vertraulichen Informationen zur Sicherung einer drahtlosen Kommunikationsverbindung (108, 110) zwischen dem ersten Gerät (102) und dem zweiten Gerät (104, 106) zu verwenden, wobei diese Verbindung dem zweiten Gerät (104, 106) den Zugriff auf die sensitiven Daten ermöglicht, und
wobei eines oder beide des ersten Geräts (102) und des zweiten Geräts (104, 106) dazu eingerichtet ist, die vertraulichen Informationen zu löschen, sobald eine oder mehrere Bedingungen im Zusammenhang mit der Kommunikationsverbindung (108, 110) erfüllt sind, und
wobei die eine oder mehreren Bedingungen umfassen, dass die Stärke eines durch das erste Gerät (102) oder das zweite Gerät (104, 106) empfangenen Drahtlossignals unter einem vorgegebenen Wert liegt oder für mindestens eine erste vordefinierte Zeitdauer unter diesem vorgegebenen Wert liegt, wobei das Signal von dem jeweils anderen des ersten Geräts (102) oder des zweiten Geräts (104, 106) stammt.

2. Vorrichtung (100) gemäß Anspruch 1, wobei die eine oder mehreren Bedingungen umfassen:
ein Fehlen der Kommunikation zwischen dem ersten Gerät (102) und dem zweiten Gerät (104) über die Kommunikationsverbindung (108, 110) für mindestens eine zweite vordefinierte Zeitdauer,
und/oder
ein Fehlen der Konnektivität über die Kommunikationsverbindung (108, 110),
und/oder
ein Fehlen der Konnektivität über die Kommunikationsverbindung (108, 110) für mindestens eine dritt vordefinierte Zeitdauer,
und/oder
dass eine Anzahl von Transaktionen über die Kommunikationsverbindung (108, 110) eine vordefinierte Anzahl überschritten hat.

3. Vorrichtung (100) gemäß Anspruch 1 oder Anspruch 2, wobei das Sicherheitsgerät (103) eine Smartcard (103) ist und das erste Gerät (102) über Smartcard-Lesegerätfunktionalität verfügt.

4. Vorrichtung (100) gemäß Anspruch 3, wobei die eine oder mehreren Bedingungen umfassen:
das Entfernen der Smartcard (103) aus dem ersten Gerät (102),
oder
das Entfernen der Smartcard (103) aus dem ersten Gerät (102) für mindestens eine vierte vordefinierte Zeitdauer.

5. Vorrichtung (100) gemäß einem der Ansprüche 1 bis 4, wobei die Kommunikationsverbindung (108, 110) eine Bluetooth®-Verbindung ist.

6. Ein erstes Gerät (200), das in der Lage ist, auf sensitive Daten zuzugreifen, die in einem Sicherheitsgerät (103) gespeichert sind, das erste Gerät (200) umfassend:
eine Kommunikationsschnittstelle (204), die mit einem Drahtloskommunikationsstandard kompatibel ist;
einen Prozessor (206); und
einen Speicher (208), der in der Lage ist, vertrauliche Daten zu speichern, die zur Sicherung einer drahtlosen Kommunikationsverbindung von dem ersten Gerät (200) zu einem zweiten Gerät verwendet werden sollen, auf dem die vertraulichen Daten gespeichert sind, wobei die Verbindung von dem zweiten Gerät verwendet wird, um über das erste Gerät Zugriff auf die sensitiven Daten zu erhalten,
wobei der Speicher (208) dazu eingerichtet ist, die vertraulichen Informationen in Klartext zu speichern,
wobei der Speicher (208) dazu eingerichtet ist, ausführbare Codemittel (210) zu speichern, die bei Ausführung durch den Prozessor (206) die vertraulichen Daten von dem ersten Gerät (200) löschen, sobald eine oder mehrere Bedingungen im Zusammenhang mit der Kommunikationsverbindung erfüllt sind, und
wobei die eine oder mehreren Bedingungen umfassen, dass die Stärke eines durch das erste Gerät (102) oder das zweite Gerät (104, 106) empfangenen Drahtlossignals unter einem vorgegebenen Wert liegt oder für mindestens eine erste vordefinierte Zeitdauer unter diesem vorgegebenen Wert liegt, wobei das Signal von dem jeweils anderen des ersten Geräts (102) oder des zweiten Geräts (104, 106) stammt.

7. Das erste Gerät (200) gemäß Anspruch 6, wobei die eine oder mehreren Bedingungen umfassen:
ein Fehlen der Kommunikation zwischen dem ersten Gerät (200) und dem zweiten Gerät über die Kommunikationsverbindung für mindestens eine zweite vordefinierte Zeitdauer,
und/oder
ein Fehlen der Konnektivität über die Kommunikationsverbindung,
und/oder
ein Fehlen der Konnektivität über die Kommunikationsverbindung für mindestens einedritt vordefinierte Zeitdauer,
und/oder
dass eine Anzahl von Transaktionen über die Kommunikationsverbindung eine vordefinierte Anzahl überschritten hat.

8. Das erste Gerät (200) gemäß Anspruch 6 oder Anspruch 7, wobei das erste Gerät (200) über Smartcard-Lesegerätfunktionalität verfügt.

9. Das erste Gerät (200) gemäß einem der Ansprüche 6 bis 8, wobei die eine oder mehreren Bedingungen umfassen:
das Entkoppeln des Sicherheitsgeräts (103) von dem ersten Gerät (200),
oder
das Entkoppeln des Sicherheitsgeräts (103) von dem ersten Gerät (200) für mindestens eine vierte vordefinierte Zeitdauer.

10. Das erste Gerät (200) gemäß einem der Ansprüche 6 bis 9, wobei der Kommunikationsstandard der Bluetooth®-Standard ist.

11. Verfahren, umfassend:
das Löschen von vertraulichen Daten von einem oder beiden eines ersten drahtlosfähigen Geräts (102) und eines zweiten drahtlosfähigen Geräts (104, 106), sobald eine oder mehrere Bedingungen im Zusammenhang mit einer drahtlosen Kommunikationsverbindung (108, 110) zwischen dem ersten Gerät (102) und dem zweiten Gerät (104, 106) erfüllt sind, zu deren Sicherung diese vertraulichen Daten verwendet werden,
wobei die eine oder mehreren Bedingungen umfassen, dass die Stärke eines durch das erste Gerät (102) oder das zweite Gerät (104, 106) empfangenen Drahtlossignals unter einem vorgegebenen Wert liegt oder für mindestens eine erste vordefinierte Zeitdauer unter diesem vorgegebenen Wert liegt, wobei das Signal von dem jeweils anderen des ersten Geräts (102) oder des zweiten Geräts (104, 106) stammt,
wobei das erste Gerät (102) die vertraulichen Daten in Klartext speichert und das erste Gerät (102) in der Lage ist, auf sensitive Daten zuzugreifen, die in einem Sicherheitsgerät (103) gespeichert sind, und
wobei das zweite Gerät (104, 106) die Verbindung (108, 110) verwendet, wenn diese durch die vertraulichen Daten gesichert ist, um auf die sensitiven Daten zuzugreifen.

12. Verfahren gemäß Anspruch 11, wobei die eine oder mehreren Bedingungen umfassen:
ein Fehlen der Kommunikation zwischen dem ersten Gerät (102) und dem zweiten Gerät (104) über die Kommunikationsverbindung (108, 110) für mindestens eine zweite vordefinierte Zeitdauer,
und/oder
ein Fehlen der Konnektivität über die Kommunikationsverbindung (108, 110),
und/oder
ein Fehlen der Konnektivität über die Kommunikationsverbindung (108, 110) für mindestens eine dritt vordefinierte Zeitdauer,
und/oder
dass eine Anzahl von Transaktionen über die Kommunikationsverbindung (108, 110) eine vordefinierte Anzahl überschritten hat.

13. Verfahren gemäß Anspruch 11 oder Anspruch 12, wobei das erste Gerät (102) über Smartcard-Lesegerätfunktionalität verfügt und das Sicherheitsgerät (103) eine Smartcard (103) ist und die eine oder mehreren Bedingungen umfassen:
das Entfernen der Smartcard (103) aus dem ersten Gerät (102),
oder
das Entfernen der Smartcard (103) aus dem ersten Gerät (102) für mindestens eine vierte vordefinierte Zeitdauer.

14. Maschinenlesbares Medium (208), umfassend ausführbare Codemittel (210), die bei Ausführung durch einen Prozessor (206) des Geräts (200) gemäß einem der Ansprüche 6 bis 10 das Gerät (200) dazu bringen, das Verfahren gemäß einem der Ansprüche 11 bis 13 zu implementieren.

## Revendications

1. Un système (100) comportant :
un premier dispositif équipé pour le sans fil (102) agencé pour stocker des informations confidentielles en clair, dans lequel ledit premier dispositif (102) est capable d'accéder à des informations sensibles stockées dans un dispositif de sécurité (103) ; et
un deuxième dispositif équipé pour le sans fil (104, 106) agencé pour stocker lesdites informations confidentielles avec une protection de contenus,
dans lequel ledit système (100) est agencé pour utiliser lesdites informations confidentielles afin de sécuriser une liaison de communication sans fil (108, 110) entre ledit premier dispositif (102) et ledit deuxième dispositif (104, 106), ladite liaison fournissant audit deuxième dispositif (104, 106) un accès auxdites informations sensibles, et
dans lequel un dispositif ou les deux dispositifs parmi ledit premier dispositif (102) et ledit deuxième dispositif (104, 106) est/sont agencé(s) pour supprimer lesdites informations confidentielles après accomplissement d'une ou plusieurs condition(s) liée(s) à ladite liaison de communication (108, 110), et
dans lequel ladite une ou lesdites plusieurs condition(s) comporte(nt) que la force d'un signal sans fil reçu par ledit premier dispositif (102) ou ledit deuxième dispositif (104, 106) soit en dessous d'un niveau prédéterminé ou en dessous dudit niveau prédéterminé pendant au moins une première période de temps prédéfinie, ledit signal ayant émané au niveau de l'autre dispositif parmi ledit premier dispositif (102) ou ledit deuxième dispositif (104, 106).

2. Le système (100) de la revendication 1, dans lequel ladite une ou lesdites plusieurs condition(s) comporte(nt) :
un manque de communication entre ledit premier dispositif (102) et ledit deuxième dispositif (104) sur ladite liaison de communication (108, 110) pendant au moins une deuxième période de temps prédéfinie,
et/ou
une perte de connectivité sur ladite liaison de communication (108, 110),
et/ou
une perte de connectivité sur ladite liaison de communication (108, 110) pendant au moins une troisième période de temps prédéfinie,
et/ou
qu'un nombre de transactions sur ladite liaison de communication (108, 110) a dépassé un nombre prédéfini.

3. Le système (100) de la revendication 1 ou de la revendication 2, dans lequel ledit dispositif de sécurité (103) est une carte intelligente (103) et ledit premier dispositif (102) comporte une fonctionnalité de lecteur de carte intelligente.

4. Le système (100) de la revendication 3, dans lequel ladite une ou lesdites plusieurs condition(s) comporte(nt)
le retrait de ladite carte intelligente (103) dudit premier dispositif (102),
ou
le retrait de ladite carte intelligente (103) dudit premier dispositif (102) pendant au moins une quatrième période de temps prédéfinie.

5. Le système (100) de n'importe laquelle des revendications 1 à 4, dans lequel ladite liaison de communication (108, 110) est une liaison Bluetooth®.

6. Un premier dispositif (200) capable d'accéder à des informations sensibles stockées dans un dispositif de sécurité (103), le premier dispositif (200) comportant :
une interface de communication (204) compatible avec une norme de communication sans fil ;
un processeur (206) ; et
une mémoire (208) capable de stocker des informations confidentielles destinées à être utilisées pour sécuriser une liaison de communication sans fil dudit premier dispositif (200) à un deuxième dispositif qui stocke lesdites informations confidentielles, où ladite liaison est utilisée par ledit deuxième dispositif afin d'obtenir l'accès auxdites informations sensibles par l'intermédiaire dudit premier dispositif,
dans lequel ladite mémoire (208) est agencée pour stocker lesdites informations confidentielles en clair,
dans lequel ladite mémoire (208) est agencée pour stocker des moyens de code exécutables (210) qui, lorsqu'ils sont exécutés par ledit processeur (206), suppriment lesdites informations confidentielles dudit premier dispositif (200) après accomplissement d'une ou plusieurs condition(s) liée(s) à ladite liaison de communication, et
dans lequel ladite une ou lesdites plusieurs condition(s) comporte(nt) que la force d'un signal sans fil reçu par ledit premier dispositif (102) ou ledit deuxième dispositif (104, 106) soit en dessous d'un niveau prédéterminé ou en dessous dudit niveau prédéterminé pendant au moins une première période de temps prédéfinie, ledit signal ayant émané au niveau de l'autre dispositif parmi ledit premier dispositif (102) ou ledit deuxième dispositif (104, 106).

7. Le premier dispositif (200) de la revendication 6, dans lequel ladite une ou lesdites plusieurs condition(s) comporte(nt) :
un manque de communication entre ledit premier dispositif (200) et ledit deuxième dispositif sur ladite liaison de communication pendant au moins une deuxième période de temps prédéfinie,
et/ou
une perte de connectivité sur ladite liaison de communication,
et/ou
une perte de connectivité sur ladite liaison de communication pendant au moins une troisième période de temps prédéfinie,
et/ou
qu'un nombre de transactions sur ladite liaison de communication a dépassé un nombre prédéfini.

8. Le premier dispositif (200) de la revendication 6 ou de la revendication 7, dans lequel ledit premier dispositif (200) comporte une fonctionnalité de lecteur de carte intelligente.

9. Le premier dispositif (200) de n'importe laquelle des revendications 6 à 8, dans lequel ladite une ou lesdites plusieurs condition(s) comporte(nt)
le découplage dudit dispositif de sécurité (103) dudit premier dispositif (200),
ou
le découplage dudit dispositif de sécurité (103) dudit premier dispositif (200) pendant au moins une quatrième période de temps prédéfinie.

10. Le premier dispositif (200) de n'importe laquelle des revendications 6 à 9, dans lequel ladite norme de communication est la norme Bluetooth®.

11. Un procédé comportant :
la suppression des informations confidentielles d'un ou plusieurs dispositif(s) parmi un premier dispositif équipé pour le sans fil (102) et un deuxième dispositif équipé pour le sans fil (104, 106) après accomplissement d'une ou plusieurs condition(s) liée(s) à une liaison de communication sans fil (108, 110) entre ledit premier dispositif (102) et ledit deuxième dispositif (104, 106) pour la sécurisation de laquelle lesdites informations confidentielles sont utilisées,
dans lequel ladite une ou lesdites plusieurs condition(s) comporte(nt) que la force d'un signal sans fil reçu par ledit premier dispositif (102) ou ledit deuxième dispositif (104, 106) soit en dessous d'un niveau prédéterminé ou en dessous dudit niveau prédéterminé pendant au moins une première période de temps prédéfinie, ledit signal ayant émané au niveau de l'autre dispositif parmi ledit premier dispositif (102) ou ledit deuxième dispositif (104, 106),
dans lequel ledit premier dispositif (102) stocke lesdites informations confidentielles en clair, et ledit premier dispositif (102) est capable d'accéder à des informations sensibles stockées dans un dispositif de sécurité (103), et
dans lequel ledit deuxième dispositif (104, 106) utilise ladite liaison (108, 110) lorsqu'elle est sécurisée par lesdites informations confidentielles pour accéder auxdites informations sensibles.

12. Le procédé de la revendication 11, dans lequel ladite une ou lesdites plusieurs condition(s) comporte(nt)
un manque de communication entre ledit premier dispositif (102) et ledit deuxième dispositif (104) sur ladite liaison de communication (108, 110) pendant au moins une deuxième période de temps prédéfinie,
et/ou
une perte de connectivité sur ladite liaison de communication (108, 110),
et/ou
une perte de connectivité sur ladite liaison de communication (108, 110) pendant au moins une troisième période de temps prédéfinie,
et/ou
qu'un nombre de transactions sur ladite liaison de communication (108, 110) a dépassé un nombre prédéfini.

13. Le procédé de la revendication 11 ou de la revendication 12, dans lequel ledit premier dispositif (102) comporte une fonctionnalité de lecteur de carte intelligente et ledit dispositif de sécurité (103) est une carte intelligente (103), et ladite une ou lesdites plusieurs condition(s) comporte(nt)
le retrait de ladite carte intelligente (103) dudit premier dispositif (102),
ou
le retrait de ladite carte intelligente (103) dudit premier dispositif (102) pendant au moins une quatrième période de temps prédéfinie.

14. Un support lisible par machine (208) comportant des moyens de code exécutables (210) qui, lorsqu'ils sont exécutés par un processeur (206) du dispositif (200) de n'importe laquelle des revendications 6 à 10, amènent ledit dispositif (200) à implémenter le procédé de n'importe laquelle des revendications 11 à 13.
